# FASCICULE DE BREVET EUROPEEN

(11) **EP 3 146 396 B1**
(45) Date de publication et mention de la délivrance du brevet: **04.07.2018**
(21) Numéro de dépôt: 15728065.2
(22) Date de dépôt: 19.05.2015
(51) Int. Cl.: G05B 19/048, G05D 23/19, G07C 5/08

(54) **PROCÉDÉ DE DÉMARRAGE DE TEST DE FONCTIONNEMENT DE VENTILATEUR**
VERFAHREN ZUM STARTEN EINES GEBLÄSEBETRIEBSTESTS
METHOD FOR STARTING A FAN OPERATION TEST

(30) Priorité: 23.05.2014 FR 1454703
(43) Date de publication de la demande: 29.03.2017
(73) Titulaire: SAFRAN AIRCRAFT ENGINES, 75015 Paris (FR)
(72) Inventeur: SCHINI, Yannick, 77550 Moissy-Cramayel Cedex (FR); RODHAIN, Arnaud, 77550 Moissy-Cramayel Cedex (FR)
(74) Mandataire: Regimbeau
(86) Numéro de dépôt international: PCT/FR2015/051308
(87) Numéro de publication internationale: WO 2015/177454

(56) Documents cités:
- FR-A1- 2 896 013
- US-A1- 2011 219 862

## Description

### DOMAINE TECHNIQUE GENERAL

L'invention a pour objet le refroidissement des calculateurs d'un turboréacteur d'un aéronef et plus particulièrement un procédé de test de fonctionnement des ventilateurs assurant un tel refroidissement.

### ETAT DE LA TECHNIQUE

Chaque turboréacteur d'un aéronef comprend au moins un calculateur, généralement au moins deux, dédié à la commande du turboréacteur et à l'analyse du bon fonctionnement de celui-ci. Afin de rester dans une plage de température permettant son bon fonctionnement, un tel calculateur nécessite parfois un refroidissement actif, par exemple lorsque l'aéronef est en fonctionnement dans une atmosphère chaude ou dans des phases de fonctionnement à l'arrêt ou à basse vitesse comme un long roulage au sol.

Un tel refroidissement peut être assuré par un ou plusieurs ventilateurs (« blower ») utilisés pour souffler de l'air extérieur sur un dissipateur de chaleur accolé au calculateur.

Selon les conditions environnementales traversées par l'aéronef, ces ventilateurs peuvent ne pas être utilisés pendant une période relativement longue, par exemple pendant plusieurs vols successifs. Afin de garantir qu'un ventilateur fonctionnera correctement lorsqu'un calculateur nécessitera un refroidissement actif, des tests de fonctionnement sont réalisés sur ces ventilateurs. Lors d'un tel test, le fonctionnement d'un ventilateur est forcé malgré l'absence de besoin de refroidissement afin de vérifier que le ventilateur n'est pas en panne et de limiter le risque de panne dormante.

Un procédé de test couramment utilisé consiste à réaliser un tel test de fonctionnement à chaque vol. Ceci permet de s'assurer que le ou les ventilateurs ne sont pas en panne. Le document FR 2 896 013 A1 divulgue la réalisation d'un test afin de déterminer l'état de fonctionnement des moyens de ventilation. Néanmoins, un tel procédé de test impose au ventilateur testé la réalisation d'un cycle de fonctionnement à chaque vol de l'aéronef et accélère donc l'usure de l'équipement, ce qui diminue sa durée de vie. De plus, lors du déclenchement d'un test, l'aéronef peut se trouver en conditions environnementales froides, notamment dans un air à une température négative. Or les ventilateurs ont une plage de fonctionnement en température limitée et peuvent mal supporter d'avoir à souffler de l'air très froid. Ainsi le fonctionnement d'un tel ventilateur en atmosphère froide peut entrainer une dégradation de l'équipement. La réalisation forcée d'un test de fonctionnement risque ainsi de faire fonctionner le ou les ventilateurs testés en dehors de leur plage de fonctionnement et de les faire tomber en panne.

Il existe ainsi un besoin d'un procédé de test de fonctionnement permettant de garantir une bonne disponibilité des équipements tout en ayant un impact minimal sur leur durée de vie et en limitant la probabilité de fonctionnement dans des conditions environnementales risquant d'entrainer une panne de l'équipement.

### PRESENTATION DE L'INVENTION

La présente invention se rapporte ainsi selon un premier aspect à un procédé de démarrage d'un test de fonctionnement d'au moins un ventilateur adapté pour refroidir au moins un calculateur d'un turboréacteur d'un aéronef, ledit procédé comprenant les étapes suivantes mises en oeuvre par un module de traitement de données :
- comparaison du nombre de vols réalisés par ledit aéronef depuis le dernier fonctionnement du ventilateur à un premier seuil,
- comparaison du nombre de vols réalisés par ledit aéronef depuis le dernier fonctionnement du ventilateur à un deuxième seuil, ledit deuxième seuil étant supérieur ou égal au premier seuil,
- acquisition d'un paramètre environnemental et vérification de la satisfaction du paramètre à une condition environnementale limite de fonctionnement du ventilateur,
- commande du démarrage dudit test de fonctionnement du ventilateur
lorsque le nombre de vols réalisés par ledit aéronef depuis le dernier fonctionnement du ventilateur est supérieur ou égal audit premier seuil, inférieur audit deuxième seuil et lorsque le paramètre acquis vérifie ladite condition environnementale limite.

Un tel procédé de test permet de tester le bon fonctionnement des ventilateurs régulièrement mais pas nécessairement à chaque vol, prolongeant ainsi leur durée de vie. Ce procédé permet également d'éviter la réalisation d'un test dans des conditions environnementales susceptibles de dégrader les ventilateurs tant qu'un nombre de vols rendant un test obligatoire n'a pas été atteint.

Le module de traitement peut en outre commander le démarrage dudit test de fonctionnement du ventilateur lorsque le nombre de vols réalisés par ledit aéronef depuis le dernier fonctionnement du ventilateur est supérieur ou égal au deuxième seuil.

Ceci permet de forcer la réalisation d'un test à partir d'un certain nombre de vols successifs sans test, quelles que soient les conditions environnementales au moment de la réalisation de ce test forcé.

Le paramètre environnemental peut comprendre une température, un taux d'humidité ou un taux de contamination de l'air.

Ledit procédé selon le premier aspect permet ainsi de retarder la tenue du test de fonctionnement lorsque la température ambiante est par exemple négative ou bien que l'air est trop humide ou contaminé, de telles conditions environnementales risquant de dégrader les ventilateurs.

Le deuxième seuil peut être représentatif du nombre de vols maximal autorisé sans réalisation d'un test de sorte à satisfaire des exigences de taux de pannes tolérés.

Ceci permet de limiter la fréquence des pannes du système de refroidissement actif causant retards et annulations de vols en testant le bon fonctionnement des ventilateurs au moins lorsque le nombre de vols successifs sans test atteint ce deuxième seuil.

Le deuxième seuil peut être fonction de la fiabilité et du nombre de pannes tolérables attribués au ventilateur.

Ceci permet de maintenir le taux de défaillance du ventilateur en-dessous d'une valeur maximale acceptable.

Dans une première variante de mise en oeuvre, le premier seuil est égal à 0.

Un tel réglage du premier seuil permet de minimiser la probabilité de réalisation d'un test dans des conditions environnementales susceptibles de dégrader le ventilateur.

Dans une deuxième variante de mise en oeuvre, le premier seuil est égal au deuxième seuil.

Une telle deuxième variante permet de minimiser le nombre de cycles de fonctionnement du ventilateur, un test étant alors réalisé lorsque le nombre de vols sans test atteint le deuxième seuil, quelles que soient les conditions environnementales.

Dans une troisième variante de mise en oeuvre, le premier seuil est déterminé de sorte à minimiser le nombre de tests réalisés tout en limitant le fonctionnement du ventilateur hors condition limite.

Le choix d'une valeur intermédiaire pour le premier seuil entre zéro et le deuxième seuil permet de trouver un compromis optimum entre la minimisation du nombre de cycles et la réduction de la probabilité de fonctionnement dans des conditions environnementales susceptibles de dégrader le ventilateur.

Selon un deuxième aspect, l'invention concerne un produit programme d'ordinateur comprenant des instructions de code pour l'exécution d'un procédé de démarrage d'un test de fonctionnement d'au moins un ventilateur selon le premier aspect lorsque ce programme est exécuté par un processeur.

Selon un troisième aspect, l'invention concerne un module de traitement de données destiné à un système de refroidissement d'au moins un calculateur d'un turboréacteur d'un aéronef et configuré pour :
- comparer le nombre de vols réalisés par ledit aéronef depuis le dernier fonctionnement d'au moins un ventilateur dudit système de refroidissement à un premier seuil,
- comparer le nombre de vols réalisés par ledit aéronef depuis le dernier fonctionnement du ventilateur à un deuxième seuil, ledit deuxième seuil étant supérieur ou égal au premier seuil,
- acquérir un paramètre environnemental et vérifier la satisfaction du paramètre à une condition environnementale limite de fonctionnement du ventilateur,
- commander le démarrage dudit test de fonctionnement du ventilateur
lorsque le nombre de vols réalisés par ledit aéronef depuis le dernier fonctionnement du ventilateur est supérieur ou égal audit premier seuil, inférieur audit deuxième seuil et lorsque le paramètre acquis vérifie ladite condition environnementale limite.

De tels produit programme d'ordinateur et module de traitement présentent les mêmes avantages que ceux évoqués pour le procédé selon le premier aspect.

Selon un quatrième aspect, l'invention concerne un système de refroidissement d'au moins deux calculateurs d'un turboréacteur d'un aéronef comprenant au moins deux ventilateurs, un calculateur avion et lesdits au moins deux calculateurs du turboréacteur, chacun des calculateurs du turboréacteur comprenant un module de traitement de données selon le troisième aspect et étant configuré, lorsque son module de traitement de données commande le démarrage du test de fonctionnement des ventilateurs, pour commander au calculateur avion l'activation de l'ensemble desdits ventilateurs par l'intermédiaire du réseau avionique.

Un tel arrangement permet que le test de fonctionnement de l'ensemble des ventilateurs soit piloté par un seul calculateur du moteur, sans nécessiter une intervention de l'autre calculateur du moteur.

Selon un cinquième aspect, l'invention concerne un système de refroidissement d'au moins deux calculateurs d'un turboréacteur comprenant au moins deux ventilateurs et lesdits au moins deux calculateurs du turboréacteur, chacun des calculateurs du turboréacteur comprenant un module de traitement de données selon le troisième aspect et étant configuré pour actionner un ventilateur lorsque son module de traitement de données commande le démarrage du test de fonctionnement de ventilateur.

Un tel arrangement permet d'envisager une logique de test différente, par exemple des seuils différents, pour chacun des ventilateurs.

### PRESENTATION DES FIGURES

D'autres caractéristiques et avantages de la présente invention apparaîtront à la lecture de la description qui va suivre d'un mode de réalisation de l'invention. Cette description sera donnée en référence aux dessins annexés dans lesquels :
- la figure 1 représente un système de refroidissement d'au moins un calculateur d'un turboréacteur d'un aéronef selon un premier mode de réalisation de l'invention ;
- la figure 2 représente un système de refroidissement d'au moins un calculateur d'un turboréacteur d'un aéronef selon un deuxième mode de réalisation de l'invention ;
- la figure 3 représente un circuit d'air d'un système de refroidissement d'au moins un calculateur d'un turboréacteur d'un aéronef selon un mode de réalisation de l'invention ;
- la figure 4 est un diagramme schématisant une mise en oeuvre d'un procédé de démarrage d'un test de fonctionnement d'au moins un ventilateur selon l'invention ;

### DESCRIPTION DETAILLEE

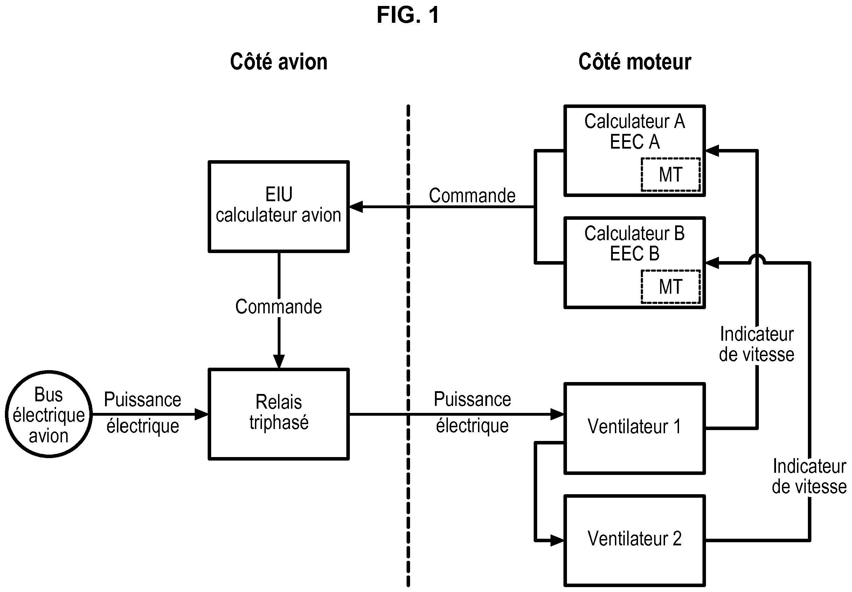

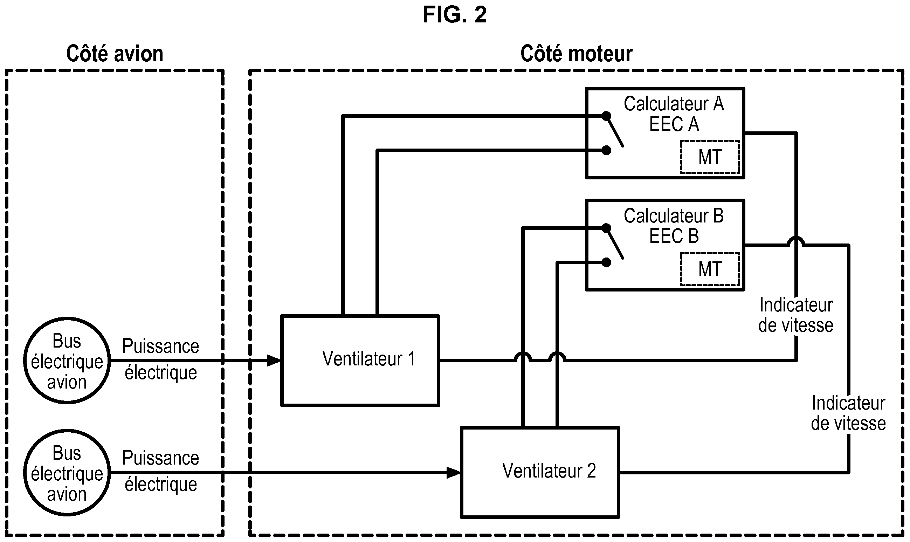

En référence aux **figures 1** **et** **2** un mode de réalisation de l'invention concerne un système de refroidissement d'au moins un calculateur d'un turboréacteur d'un aéronef, ledit système de refroidissement comprenant ledit au moins un calculateur, au moins un ventilateur et au moins un module de traitement de données MT.

Ledit calculateur peut être un calculateur EEC (« electronic engine controller ») du FADEC de l'aéronef, dédié à la commande du turboréacteur et à l'analyse de son fonctionnement. Afin d'évacuer la chaleur produite par les circuits du calculateur, celui-ci peut être contenu dans un boitier disposant d'un dissipateur de chaleur, par exemple sous la forme d'ailettes de refroidissement. Afin d'assurer le refroidissement du calculateur, ledit au moins un ventilateur du système de refroidissement est arrangé pour souffler sur ce dissipateur de l'air pris dans l'atmosphère extérieure.

Selon un mode de réalisation le calculateur est dit à double peau et le dissipateur du boitier est alors surmonté d'une plaque permettant de canaliser au travers du dissipateur le flux d'air soufflé par l'au moins un ventilateur.

L'au moins un ventilateur peut être un ventilateur électrique alimenté par le réseau électrique de l'avion. Ledit ventilateur est adapté pour fournir au calculateur un signal indicateur de vitesse indiquant sa mise en rotation, par exemple sous la forme d'un booléen.

L'au moins un module de traitement de données MT dispose d'une mémoire, de moyens de calcul et est relié à l'au moins un ventilateur afin de recevoir le signal indiquant le fonctionnement de celui-ci. Un tel module de traitement peut être intégré dans l'au moins un calculateur du turboréacteur.

Dans un mode de réalisation représenté en **figures 1** **et** **2**, le système de refroidissement peut comprendre au moins deux ventilateurs et au moins deux calculateurs de manière à assurer une redondance des moyens de calcul et de leur refroidissement pour une plus grande sûreté de fonctionnement. Chaque calculateur peut alors comprendre son propre module de traitement.

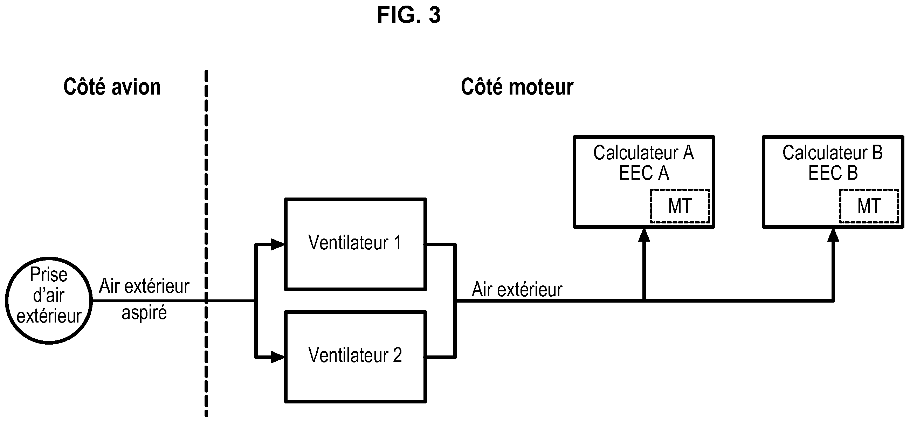

Le circuit d'air représenté en **figure 3** comprend une prise d'air extérieur commune par laquelle les ventilateurs aspirent de l'air extérieur. Les ventilateurs ventilent ensuite cet air extérieur vers les au moins deux calculateurs par l'intermédiaire d'un conduit commun. Ainsi, un seul ventilateur peut suffire au refroidissement de deux calculateurs. Avantageusement, chaque ventilateur est conçu de sorte à assurer un débit d'air total suffisant au refroidissement de l'ensemble des calculateurs.

Dans une première variante de réalisation illustrée en **figures 1**, chacun des calculateurs est configuré pour commander l'activation de l'ensemble desdits ventilateurs par l'intermédiaire du réseau avionique (ARINC) lorsque son module de traitement de données commande le démarrage d'un test de fonctionnement de ventilateur. Pour ce faire comme représenté en **figure 1****,** les ou chacun des calculateurs (EEC) peuvent être connectés par l'intermédiaire du réseau avionique à un calculateur situé dans l'avion, par exemple un EIU (« Engine Interface Unit ») ou un DPC (« Digital Processing Computer »), qui est configuré pour commander un relais tri-phasé agissant comme interrupteur entre les deux ventilateurs et le réseau électrique de l'avion.

Dans une deuxième variante de réalisation illustrée en **figure 2**, chaque calculateur est configuré pour commander l'activation d'un seul ventilateur lorsque son module de traitement de données commande le démarrage du test de fonctionnement de ventilateur. Pour ce faire, chaque calculateur est connecté à l'alimentation électrique d'un ventilateur et agit sur un interrupteur pour alimenter ou non le ventilateur et ainsi commander son fonctionnement ou non.

Pour déterminer si un test de fonctionnement d'au moins un ventilateur appartenant au système de refroidissement d'au moins un calculateur d'un turboréacteur doit être réalisé, le module de traitement vérifie que le nombre de vols réalisés par ledit aéronef depuis le dernier fonctionnement du ventilateur est supérieur ou égal à un premier seuil, inférieur à un deuxième seuil et qu'un paramètre environnemental qu'il a acquis satisfait à une condition environnementale limite de fonctionnement du ventilateur.

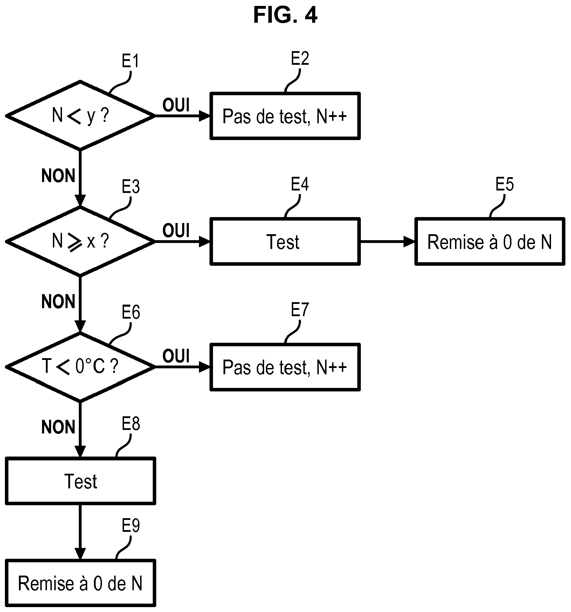

Plus précisément, et en référence à la **figure 4** illustrant une mise en oeuvre du procédé selon l'invention, dans une première étape de comparaison E1, le module de traitement de données compare le nombre de vols réalisés par ledit aéronef depuis le dernier fonctionnement du ventilateur N à un premier seuil y. Ce premier seuil y correspond ainsi au nombre de vols à partir duquel un test de fonctionnement des ventilateurs peut être réalisé.

Si le nombre de vols réalisés par ledit aéronef depuis le dernier fonctionnement du ventilateur N est inférieur à ce premier seuil y, le module de traitement ne commande pas le démarrage d'un test dans une deuxième étape sans test E2. Ceci permet de ne pas réaliser de test à chaque vol et de limiter le nombre de cycles de fonctionnement des ventilateurs afin de préserver leur durée de vie.

Si le nombre de vols réalisés par ledit aéronef depuis le dernier fonctionnement du ventilateur N est supérieur ou égal au premier seuil y, dans une troisième étape de comparaison E3, le module de traitement de données compare le nombre de vols réalisés par ledit aéronef depuis le dernier fonctionnement du ventilateur à un deuxième seuil x, le deuxième seuil étant supérieur ou égal au premier seuil y.

Si le nombre de vols réalisés par ledit aéronef depuis le dernier fonctionnement du ventilateur N est supérieur ou égal à ce deuxième seuil x, le module de traitement commande le démarrage du test de fonctionnement des ventilateurs lors d'une quatrième étape de test E4. Ce deuxième seuil x est ainsi représentatif du nombre de vol maximal autorisé sans réalisation d'un test de sorte à satisfaire des exigences de taux de pannes du système de refroidissement tolérés. Au-delà de ce deuxième seuil, le test doit être réalisé afin de garantir un taux de pannes inférieur au taux de pannes toléré. Une fois que les ventilateurs ont été testés, le nombre de vol réalisés par ledit aéronef depuis le dernier fonctionnement du ventilateur est remis à 0 lors d'une cinquième étape de réinitialisation E5. Ainsi un test des ventilateurs ne peut être ensuite être réalisé qu'après y vols supplémentaires sans test ce qui évite un fonctionnement répété des ventilateurs et leur usure. Le deuxième seuil x peut être déterminé à partir du taux de fiabilité requis du ventilateur. Il peut également être déterminé à partir du taux de retard et annulation de vols attribué au ventilateur par l'avionneur. Ce taux de retard et annulation correspond à la proportion de vols subissant un retard ou annulés en raison d'un problème de ventilateur sur l'ensemble des vols réalisés

Si le nombre de vols réalisés par ledit aéronef depuis le dernier fonctionnement du ventilateur N est inférieur au deuxième seuil x lors de la troisième étape E3, le module de traitement de données acquiert un paramètre environnemental T. Ce paramètre environnemental T peut par exemple être une température, un taux d'humidité, un taux de contamination de l'air... Ce paramètre environnemental peut être mesuré à l'aide de capteurs localisés sur les calculateurs ou connectés à ceux-ci. Le module de traitement vérifie alors lors d'une sixième étape de vérification E6 que le paramètre mesuré satisfait à une condition environnementale limite de fonctionnement du ventilateur. Le module de traitement peut vérifier par exemple que la température des ventilateurs ne descend pas en dessous d'une certaine température limite requise par les spécifications. Les spécifications peuvent ainsi requérir que les ventilateurs ne fonctionnent pas en dessous de 0 degré, ou de -5 ou - 10 degrés à titre d'exemple, les ventilateurs étant sensibles au gel et au givre. En effet en dessous d'une certaine température, la graisse de roulement des ventilateurs peut se gélifier et empêcher le moteur de faire tourner le ventilateur, entrainant ainsi une panne du ou des calculateurs. Cette étape de vérification E6 permet d'éviter de réaliser des tests hors spécifications et donc de détériorer les ventilateurs. Ainsi si le paramètre environnemental ne satisfait pas ladite condition environnementale limite du point de vue du fonctionnement du ventilateur, par exemple que la température est inférieure à 0, le module de traitement de données ne commande pas le démarrage du test de fonctionnement des ventilateurs lors d'une septième étape sans test E7.

En revanche lorsque le nombre de vols réalisés par ledit aéronef depuis le dernier fonctionnement du ventilateur N est supérieur ou égal audit premier seuil y, inférieur audit deuxième seuil x et lorsque le paramètre acquis T vérifie ladite condition environnementale limite, le module de traitement de données commande le démarrage dudit test de fonctionnement de ventilateur lors d'une huitième étape de test E8.

Ainsi le nombre de cycles de fonctionnement dus à des tests des ventilateurs est réduit, ce qui augmente leur durée de vie, tout en testant régulièrement le bon fonctionnement des ventilateurs. De plus, la probabilité de réaliser un test en condition hors spécifications est réduite. Aucun test en condition hors spécifications n'est en effet réalisé tant que le nombre de vols réalisés par ledit aéronef depuis le dernier fonctionnement du ventilateur N est inférieur à x vols.

Une fois que les ventilateurs ont été testés, le nombre de vols réalisés par ledit aéronef depuis le dernier fonctionnement du ventilateur N est remis à 0 lors d'une neuvième étape de réinitialisation E9. Ainsi un test des ventilateurs ne peut ensuite être réalisé qu'après y vols minimum ce qui évite un fonctionnement répété des ventilateurs et leur dégradation.

A chaque fonctionnement des ventilateurs, le nombre de vols réalisés par ledit aéronef depuis le dernier fonctionnement du ventilateur N peut également être remis à 0. En effet lors du fonctionnement des ventilateurs, les calculateurs vérifient la bonne réception d'un signal indiquant le fonctionnement des ventilateurs et détectent les éventuelles pannes de ceux-ci, réalisant l'équivalent d'un test de fonctionnement de ces ventilateurs.

Le premier seuil y ainsi que le deuxième seuil x peuvent être paramétrés en fonction des objectifs visés par un utilisateur du système ou par auto apprentissage.

Afin de limiter au maximum le nombre de cycles de fonctionnement des ventilateurs et de prolonger au maximum leur durée de vie, le premier seuil y peut être fixé à la même valeur que le deuxième seuil x. Un test est alors réalisé tous les x vols uniquement c'est-à-dire lorsque le nombre de vols réalisés sans qu'un test soit réalisé devient critique du point de vue du taux de pannes toléré.

Au contraire, afin de limiter au maximum le fonctionnement des ventilateurs dans des conditions hors spécification, par exemple en conditions froides, le premier seuil y peut être fixé à 0. Un test peut alors être réalisé dès que les conditions vérifiant les spécifications sont atteintes, éventuellement à chaque vol.

Enfin, il est possible également de fixer le premier seuil y à une valeur intermédiaire de sorte à minimiser le nombre de tests réalisés tout en limitant le fonctionnement du ventilateur hors condition limite. Ce premier seuil optimum peut être obtenu par auto apprentissage. Il peut également être obtenu en réalisant une moyenne des intervalles de test de différents turboréacteurs ayant présenté une durée de vie acceptable.

Cette solution peut être utilisée pour tous moteurs et équipements nécessitant la réalisation d'un test de fonctionnement et pouvant être soumis à des contraintes environnementales risquant d'entraîner une panne de ces équipements ou moteurs. Cette solution peut être appliquée tout particulièrement aux ventilateurs des moteurs LEAP-1A (« Leading Edge Aviation Propulsion »), LEAP-1B et LEAP-1C.

## Revendications

1. Procédé de démarrage d'un test de fonctionnement d'au moins un ventilateur adapté pour refroidir au moins un calculateur d'un turboréacteur d'un aéronef,
ledit procédé comprenant les étapes suivantes mises en oeuvre par un module de traitement de données (MT) :
- comparaison (E1) du nombre de vols réalisés par ledit aéronef depuis le dernier fonctionnement du ventilateur à un premier seuil (y),
- comparaison (E3) du nombre de vols réalisés par ledit aéronef depuis le dernier fonctionnement du ventilateur à un deuxième seuil (x), ledit deuxième seuil étant supérieur ou égal au premier seuil,
- acquisition d'un paramètre environnemental (T) et vérification de la satisfaction du paramètre à une condition environnementale limite de fonctionnement du ventilateur (E6),
- commande (E8) du démarrage dudit test de fonctionnement du ventilateur
lorsque le nombre de vols réalisés par ledit aéronef depuis le dernier fonctionnement du ventilateur est supérieur ou égal audit premier seuil, inférieur audit deuxième seuil et lorsque le paramètre acquis vérifie ladite condition environnementale limite.

2. Procédé selon la revendication 1, dans lequel le module de traitement (MT) commande (E4) le démarrage dudit test de fonctionnement du ventilateur lorsque le nombre de vols réalisés par ledit aéronef depuis le dernier fonctionnement du ventilateur est supérieur ou égal au deuxième seuil.

3. Procédé selon l'une des revendications précédentes, dans lequel le paramètre environnemental (T) comprend une température, un taux d'humidité ou un taux de contamination de l'air.

4. Procédé selon l'une des revendications précédentes, dans lequel le deuxième seuil (x) est représentatif du nombre de vol maximal autorisé sans réalisation d'un test de sorte à satisfaire des exigences de taux de pannes tolérés.

5. Procédé selon l'une des revendications précédentes, dans lequel le deuxième seuil (x) est fonction de la fiabilité et du nombre de pannes tolérables attribués au ventilateur.

6. Procédé selon l'une des revendications précédentes, dans lequel le premier seuil (y) est égal à 0.

7. Procédé selon l'une des revendications précédentes, dans lequel le premier seuil (y) est égal au deuxième seuil.

8. Procédé selon l'une des revendications précédentes, dans lequel le premier seuil (y) est déterminé de sorte à minimiser le nombre de tests réalisés tout en limitant le fonctionnement du ventilateur hors condition limite.

9. Produit programme d'ordinateur comprenant des instructions de code pour l'exécution d'un procédé de démarrage d'un test de fonctionnement d'au moins un ventilateur selon l'une quelconque des revendications précédentes lorsque ce programme est exécuté par un processeur.

10. Module de traitement de données (MT) destiné à un système de refroidissement d'au moins un calculateur d'un turboréacteur d'un aéronef et configuré pour :
- comparer le nombre de vols réalisés par ledit aéronef depuis le dernier fonctionnement d'au moins un ventilateur dudit système de refroidissement à un premier seuil (y),
- comparer le nombre de vols réalisés par ledit aéronef depuis le dernier fonctionnement du ventilateur à un deuxième seuil (x), ledit deuxième seuil étant supérieur ou égal au premier seuil,
- acquérir un paramètre environnemental (T) et vérifier la satisfaction du paramètre à une condition environnementale limite de fonctionnement du ventilateur,
- commander le démarrage dudit test de fonctionnement du ventilateur
lorsque le nombre de vols réalisés par ledit aéronef depuis le dernier fonctionnement du ventilateur est supérieur ou égal audit premier seuil, inférieur audit deuxième seuil et lorsque le paramètre acquis vérifie ladite condition environnementale limite.

11. Système de refroidissement d'au moins deux calculateurs d'un turboréacteur d'un aéronef comprenant au moins deux ventilateurs, un calculateur avion et lesdits au moins deux calculateurs du turboréacteur, chacun des calculateurs du turboréacteur comprenant un module de traitement de données selon la revendication 10 et étant configuré, lorsque son module de traitement de données (MT) commande le démarrage du test de fonctionnement des ventilateurs, pour commander au calculateur avion l'activation de l'ensemble desdits ventilateurs par l'intermédiaire du réseau avionique (ARINC).

12. Système de refroidissement d'au moins deux calculateurs d'un turboréacteur comprenant au moins deux ventilateurs et lesdits au moins deux calculateurs du turboréacteur, chacun des calculateurs du turboréacteur comprenant un module de traitement de données (MT) selon la revendication 10 et étant configuré pour actionner un ventilateur lorsque son module de traitement de données commande le démarrage du test de fonctionnement de ventilateur.

## Patentansprüche

1. Verfahren zum Starten eines Betriebstests mindestens eines Gebläses, das ausgebildet ist, um mindestens einen Rechner eines Turboreaktors eines Luftfahrzeugs zu kühlen,
wobei das Verfahren die folgenden Schritte umfasst, die von einem Datenverarbeitungsmodul (MT) umgesetzt werden:
- Vergleichen (E1) der Anzahl der von dem Luftfahrzeug seit dem letzten Betrieb des Gebläses durchgeführten Flüge mit einem ersten Grenzwert (y),
- Vergleichen (E3) der Anzahl der von dem Luftfahrzeug seit dem letzten Betrieb des Gebläses durchgeführten Flüge mit einem zweiten Grenzwert (x), wobei der zweite Grenzwert größer als der oder gleich dem ersten Grenzwert ist,
- Ermitteln eines Umweltparameters (T) und überprüfen, ob der Parameter eine Grenzumweltbedingung des Betriebs des Gebläses (E6) erfüllt,
- Befehlen (E8) des Starts des Betriebstests des Gebläses,
wenn die Anzahl der von dem Luftfahrzeug seit dem letzten Betrieb des Gebläses durchgeführten Flüge größer als der oder gleich dem ersten Grenzwert, kleiner als der zweite Grenzwert ist und wenn der ermittelte Parameter die Grenzumweltbedingung verifiziert.

2. Verfahren nach Anspruch 1, wobei das Verarbeitungsmodul (MT) den Start des Betriebstests des Gebläses befiehlt (E4), wenn die Anzahl der von dem Luftfahrzeug seit dem letzten Betrieb des Gebläses durchgeführten Flüge größer als der oder gleich dem zweiten Grenzwert ist.

3. Verfahren nach einem der vorangehenden Ansprüche, wobei der Umweltparameter (T) eine Temperatur, einen Feuchtigkeitsgrad oder einen Kontaminationsgrad der Luft umfasst.

4. Verfahren nach einem der vorangehenden Ansprüche, wobei der zweite Grenzwert (x) für die maximal zugelassene Anzahl von Flügen ohne Durchführung eines Tests derart repräsentativ ist, dass Anforderungen an die Rate tolerierter Pannen erfüllt werden.

5. Verfahren nach einem der vorangehenden Ansprüche, wobei der zweite Grenzwert (x) von der Zuverlässigkeit und von der Anzahl der dem Gebläse zugewiesen tolerierbarer Pannen abhängt.

6. Verfahren nach einem der vorangehenden Ansprüche, wobei der erste Grenzwert (y) gleich 0 ist.

7. Verfahren nach einem der vorangehenden Ansprüche, wobei der erste Grenzwert (y) gleich dem zweiten Grenzwert ist.

8. Verfahren nach einem der vorangehenden Ansprüche, wobei der erste Grenzwert (y) derart bestimmt wird, dass die Anzahl der durchgeführten Tests bei Begrenzung des Betriebs des Gebläses außerhalb einer Grenzbedingung minimiert wird.

9. Rechnerprogrammprodukt, umfassend Codeinstruktionen für die Ausführung eines Verfahrens zum Starten eines Betriebstests mindestens eines Gebläses nach einem der vorangehenden Ansprüche, wenn dieses Programm von einem Prozessor ausgeführt wird.

10. Datenverarbeitungsmodul (MT), das für ein Kühlsystem mindestens eines Rechners eines Turboreaktors eines Luftfahrzeugs bestimmt und konfiguriert ist, um:
- die Anzahl der von dem Luftfahrzeug seit dem letzten Betrieb mindestens eines Gebläses des Kühlsystems durchgeführten Flüge mit einem ersten Grenzwert (y) zu vergleichen,
- die Anzahl der von dem Luftfahrzeug seit dem letzten Betrieb des Gebläses durchgeführten Flüge mit einem zweiten Grenzwert (x) zu vergleichen, wobei der zweite Grenzwert größer als der oder gleich dem ersten Grenzwert ist,
- einen Umweltparameter (T) zu ermitteln und zu überprüfen, ob der Parameter eine Grenzumweltbedingung des Betriebs des Gebläses erfüllt,
- den Start des Betriebstests des Gebläses zu befehlen,
wenn die Anzahl der von dem Luftfahrzeug seit dem letzten Betrieb des Gebläses durchgeführten Flüge größer als der oder gleich dem ersten Grenzwert, kleiner als der zweite Grenzwert ist und wenn der ermittelte Parameter die Grenzumweltbedingung verifiziert.

11. Kühlsystem von mindestens zwei Rechnern eines Turboreaktors eines Luftfahrzeugs, umfassend mindestens zwei Gebläse, einen Flugzeugrechner und die mindestens zwei Rechner des Turboreaktors, wobei jeder der Rechner des Turboreaktors ein Datenverarbeitungsmodul nach Anspruch 10 umfasst und konfiguriert ist, um, wenn sein Datenverarbeitungsmodul (MT) das Starten des Betriebstests des Gebläses befiehlt, dem Flugzeugrechner die Aktivierung aller Gebläse über das Avioniknetz (ARINC) zu befehlen.

12. Kühlsystem von mindestens zwei Rechnern eines Turboreaktors, umfassend mindestens zwei Gebläse und die mindestens zwei Rechner des Turboreaktors, wobei jeder der Rechner des Turboreaktors ein Datenverarbeitungsmodul (MT) nach Anspruch 10 und umfasst und konfiguriert ist, um ein Gebläse zu betätigen, wenn sein Datenverarbeitungsmodul das Starten des Betriebstests des Gebläses befiehlt.

## Claims

1. A method for starting an operating test of at least one fan adapted to cool at least one computer of a turbojet of an aircraft,
said method comprising the following steps performed by a data-processing module (MT):
- comparison (E1) of the number of flights made by said aircraft since the most recent operation of the fan to a first threshold (y),
- comparison (E3) of the number of flights made by said aircraft since the most recent operation of the fan to a second threshold (x), said second threshold being greater than or equal to the first threshold,
- acquisition of an environmental parameter (T) and verification of the satisfaction of the parameter with a boundary environmental condition of operation of the fan (E6),
- control (E8) of the starting of said operating test of the fan
when the number of flights made by said aircraft since the most recent operation of the fan is greater than or equal to said first threshold, less than said second threshold and when the acquired parameter verifies said boundary environmental condition.

2. The method according to claim 1, wherein the processing module (MT) controls (E4) the starting of said operating test of the fan when the number of flights made by said aircraft since the most recent operation of the fan is greater than or equal to the second threshold.

3. The method according to one of the preceding claims, wherein the environmental parameter (T) comprises a temperature, a humidity rate or an air contamination rate.

4. The method according to one of the preceding claims, wherein the second threshold (x) is representative of the maximum number of flights authorized without performing a test to satisfy requisites of tolerated malfunction rates.

5. The method according to one of the preceding claims, wherein the second threshold (x) is a function of the reliability and number of tolerable malfunctions attributed to the fan.

6. The method according to one of the preceding claims, wherein the first threshold (y) is equal to 0.

7. The method according to one of the preceding claims, wherein the first threshold (y) is equal to the second threshold.

8. The method according to one of the preceding claims, wherein the first threshold (y) is determined so as to minimize the number of tests conducted while limiting operation of the fan outside a boundary condition.

9. A computer program product comprising code instructions for execution of a method for starting an operating test of at least one fan, according to any one of the preceding claims when this program is executed by a processor.

10. A data-processing-module (MT) intended for a cooling system of at least one computer of a turbojet of an aircraft and configured to:
- compare the number of flights made by said aircraft since the most recent operation of at least one fan of said cooling system to a first threshold (y),
- compare the number of flights made by said aircraft since the most recent operation of the fan to a second threshold (x), said second threshold being greater than or equal to the first threshold,
- acquire an environmental parameter (T) and verify satisfaction of the parameter with a boundary environmental condition of operation of the fan,
- control starting of said operating test of the fan
when the number of flights made by said aircraft since the most recent operation of the fan is greater than or equal to said first threshold, less than said second threshold and when the acquired parameter verifies said boundary environmental condition.

11. A cooling system of at least two computers of a turbojet of an aircraft comprising at least two fans, an aircraft computer and said at least two computers of the turbojet, each of the computers of the turbojet comprising a data-processing module, according to claim 10 and being configured, when its data-processing module (MT) controls the starting of the operation test of the fans, to order the aircraft computer to activate all said fans by means of the avionics network (ARINC).

12. A cooling system of at least two computers of a turbojet comprising at least two fans and said at least two computers of the turbojet, each of the computers of the turbojet comprising a data-processing module (MT) according to claim 10 and being configured to actuate a fan when its data-processing module controls the starting of the fan operation test.
